(19) Europäisches Patentamt

European Patent Office

Office européen des brevets

(11) **EP 2 621 046 B1**

(12) **EUROPEAN PATENT SPECIFICATION**

(45) Date of publication and mention
of the grant of the patent:
**01.01.2020   Bulletin 2020/01**

(51) Int Cl.:
***H02J 3/18*** *(2006.01)*          ***H02J 3/38*** *(2006.01)*

(21) Application number: **12152479.7**

(22) Date of filing: **25.01.2012**

(54) **System and method for reactive power regulation**

System und Verfahren für die Reaktionsstromregelung

Système et procédé pour la régulation de la puissance réactive

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.07.2013   Bulletin 2013/31**

(73) Proprietor: **General Electric Company
Schenectady, NY 12345 (US)**

(72) Inventors:
 • **Yuan, Xiaoming
  430074 Hubei (CN)**
 • **Tan, Zhuohui
  201100 Shanghai (CN)**
 • **Klodowski, Anthony Michael
  Salem, VA Virginia 24153 (US)**

(74) Representative: **Zimmermann & Partner
Patentanwälte mbB
Postfach 330 920
80069 München (DE)**

(56) References cited:
 WO-A1-2010/028689    WO-A2-2011/037537
 US-A- 5 883 796     US-A- 6 052 297
 US-A- 6 056 782     US-B2- 7 321 500
 US-B2- 7 456 695

 • **FEI WANG ET AL: "Pliant Active and Reactive
  Power Control for Grid-Interactive Converters
  Under Unbalanced Voltage Dips", IEEE
  TRANSACTIONS ON POWER ELECTRONICS,
  IEEE SERVICE CENTER, PISCATAWAY, NJ, US,
  vol. 26, no. 5, 1 May 2011 (2011-05-01), pages
  1511-1521, XP011382807, ISSN: 0885-8993, DOI:
  10.1109/TPEL.2010.2052289**

## Description

Embodiments of the invention relate generally to power regulation, and more particularly relate to reactive power regulation.

Power sources such as solar panels and wind turbines have received increased attention as environmentally safe and sustainable alternative power sources compared to traditional coal powered power sources. When the power output from the power sources is fed to an electrical grid for transmission and distribution, it is usually necessary to control the reactive power of the output power to fulfill electrical demand while providing stability for the electrical grid.

Conventional reactive power control is based on the assumption that the electrical grid is always symmetrical in three phases. Based on this assumption, the reactive power is regulated by directly adjusting the output power in positive sequence components without considering negative sequence components in the electrical grid. However, in an imbalanced electrical grid, the negative sequence components may lead to second order ripples in the output power. Therefore, the reactive power control is not accurate due to the lack of reactive power regulation with respect to the negative sequence components.

In addition, many countries now require that power sources stay connected with the electrical grid when the electrical grid experiences fault conditions. However, providing accurate reactive power control may be even more challenging during fault conditions.

Fei Wang et al: "Pliant Active and Reactive Power Control for Grid-Interactive Converters Under Unbalanced Voltage Dips", IEEE Transactions on Power Electronics, IEEE Service Center, Piscataway, NJ, US, vol. 26, no. 5, 1 May 2011, pages 1511-1521 ISSN: 0885-8993, DOI: 10.1109/TPEL.2010.2052289 describes a technique for reactive power control where a reference current is obtained as the sum of positive and negative reactive power components.

US 6,052,297 describes a power conversion apparatus having a current component control section which outputs q axis and d axis negative sequence components and q axis and d axis positive sequence components based upon a detected current or voltage value.

WO 2010/028689 A1 describes a method to control power output of a doubly-fed induction machine to a grid including the steps of measuring grid voltage and grid current in a three phase coordinate system, transforming grid voltage and grid current into a stator frame coordinate system, decomposing the grid voltage and grid current in the stator frame coordinate system in a positive sequence system and in a negative sequence system, calculating active and reactive power in the positive and negative sequence system, and controlling active and reactive power in the positive and negative sequence system.

US 7,321,500 B2 describes a voltage source converter for high power application containing a plurality of valves. Each valve contains a plurality of extinguishable semiconducting elements, and a valve control unit containing a computer and a pulse-width modulator providing an executing control signal for controlling the semiconducting elements. The valve control unit includes a first control containing a first pulse-width modulator for providing a first pulse-width modulation signal, a second control containing a second pulse-width modulator for providing, a second pulse-width modulation signal, a mode detector, and a selector connected to the first and second pulse-width modulator for selecting in dependence of the mode detector the executing pulse-width modulation signal.

It is desirable to provide a system and method for regulating reactive power to address the above-mentioned problems.

Various aspects and embodiments of the present invention, as defined by the appended claims, are therefore provided.

Various other features, aspects, and advantages of the present disclosure will become better understood when the following detailed description is read with reference to the accompanying drawings in which like characters represent like parts throughout the drawings, wherein:

FIG. 1 is a block diagram of a system in accordance with an exemplary embodiment.

FIG. 2 is a block diagram of one embodiment of a controller for use in the embodiment of in FIG. 1.

FIG. 3 is a block diagram illustrating several circuits of the controller shown in FIG. 2 in accordance with an exemplary embodiment.

FIG. 4 is a block diagram of one embodiment of a positive current decoupling circuit of a current decoupling circuit for use in the embodiment in FIG. 3.

FIG. 5 is a block diagram of one embodiment of a negative current decoupling circuit of a current decoupling circuit for use in the embodiment in FIG. 3.

FIG. 6 is a block diagram of a first power calculation module of the power calculation circuit shown in FIG. 3 in accordance with an exemplary embodiment.

FIG. 7 is a block diagram of a second power calculation module of the power calculation circuit shown in FIG. 3 in accordance with an exemplary embodiment.

FIG. 8 is a block diagram of a first positive regulation module of a positive power regulator shown in FIG. 2 in accordance with an exemplary embodiment.

FIG. 9 is a block diagram of a second positive regulation module of a positive power regulator shown in FIG. 2 in accordance with an exemplary embodiment.

FIG. 10 is a block diagram of a first negative regulation module of a negative power regulator shown in FIG. 2 in accordance with an exemplary embodiment.

FIG. 11 is a block diagram of a second negative regulation module of a negative power regulator shown in FIG. 2 in accordance with an exemplary embodiment.

FIG. 12 is a block diagram of a current regulator of the controller shown in FIG. 2 in accordance with an exemplary embodiment.

FIG. 13 is a block diagram of another embodiment of a current decoupling circuit for use in the embodiment in FIG. 3.

FIG. 14 is a block diagram of the first positive regulation module of the positive power regulator shown in FIG. 2 in accordance with another exemplary embodiment.

FIG. 15 is a block diagram of the second positive regulation module of the positive power regulator shown in FIG. 2 in accordance with another exemplary embodiment.

FIG. 16 is a block diagram of the second negative regulation module of the negative power regulator shown in FIG. 2 in accordance with another exemplary embodiment.

Embodiments disclosed herein relate to a system and method for reactive power regulation.

The invention is defined by the features of the independent claims 1 and 11. Preferred embodiments are defined in the dependent claims.

In one aspect, the system and method are implemented by decoupling positive sequence components and negative sequence components of the system output power. The system and method are further implemented by separately regulating reactive power with respect to the positive sequence and the negative sequence for controlling the reactive power more accurately and thereby stabilizing the electrical grid and mitigating grid imbalance. As the positive reactive power and negative reactive power are independently regulated, the terms "vector VAR control" or "vector VAR regulation" are introduced herein. These terms are not intended to limit the scope of the disclosure of reactive power control only as, in some implementations, "vector VAR control" may also include active power control or active power regulation.

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. The use of "including," "comprising" or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect.

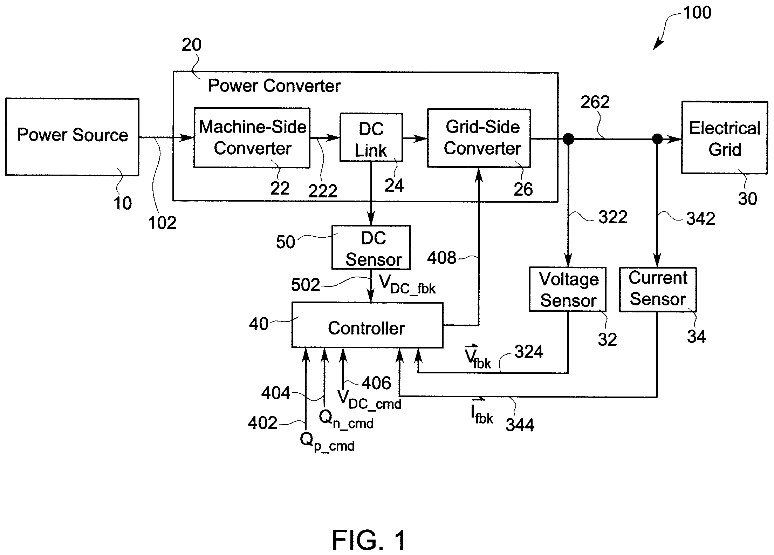

FIG. 1 illustrates a block diagram of a system 100 in accordance with an exemplary embodiment. In the illustrated embodiment of FIG. 1, the system 100 generally includes a power source 10, a power converter 20, an electrical grid 30, and a controller 40. Each block of the system 100 will be described in further detail below.

The power source 10 is configured to generate a first form of electric power 102 from a variety of available energy sources. In one implementation of the disclosure, the power source 10 may include an electrical machine such as a wind turbine or a marine hydrokinetic energy turbine. A wind turbine is operable to transform mechanical wind power to mechanical rotational power and to convert the mechanical rotational power to generate three-phase alternating current (AC) electric power. Marine turbines are operable to transform mechanical tidal power to generate three-phase AC electric power. It should be recognized the three-phase AC electric power is one type of the first form of electric power 102. In other embodiments, the first form of electric power may include poly-phase AC electric power or direct current (DC) electric power. In one implementation, the power source 10 may include a solar panel having a packaged assembly of solar cells. The solar panel is configured to generate DC electric power from the sun through photovoltaic effects.

The power converter 20 is coupled to the power source 10 for receiving the first form of electric power 102 from the power source 10. The power converter 20 is configured to convert the first form of electric power 102 to a second form of electric power 262. In one implementation of the disclosure wherein the power source 10 includes a wind turbine, the power converter 20 is designed to include a machine-side converter 22, a grid-side converter 26, and a direct current (DC) link 24 coupled between the machine-side converter 22 and the grid-side converter 26. The machine-side converter 22 acts as a rectifier and is configured to rectify the three-phase AC electric power 102 to DC electric power 222. The DC electric power 222 is transmitted to the DC link 24. The DC link 24 may include one or more capacitors coupled in series or in parallel. The DC link 24 is configured to mitigate voltage variations across the DC link 24 with AC rectification. The DC electric power 222 is subsequently transmitted from the DC link 24 to the grid-side converter 26. The grid-side converter 26 acts as an inverter, is configured to convert the DC electric power 222 from DC link 24 back to three-phase AC electric power 262, and is controlled by the controller 40. The three-phase AC electric power 262 is subsequently transmitted to the electrical grid 30 for transmission and distribution. In one embodiment, the machine-side converter 22 and the grid-side converter 26 may include a three-phase two-level topology with a series of semiconductor power switches fully controlled and regulated using a pulse width modulation (PWM) strategy. In alternative embodiments, the machine-side converter 22 and the grid-side converter 26 may include three-phase three-level topology. The semiconductor power switches may include any appropriate devices with several examples including insulated gate bipolar transistors (IGBTs), gate communicated thyristors (GCTs), and metal oxide semiconductor field effect transistors (MOSFETs). In embodiments wherein the power source 10 supplies DC power, the machine-side converter 22 may be omitted or may be configured as a DC to DC converter, for example.

In the illustrated embodiment of FIG. 1, the system 100 further includes a voltage sensor 32, a current sensor 34, and a DC voltage sensor 50. The voltage sensor 32 and the current sensor 34 are both electrically coupled to a joint connection between the grid-side converter 26 and the electrical grid 30. The voltage sensor 32 is configured to measure a system voltage 322 of the three-phase AC electric power 262 transmitted to the electrical grid 30, and in response thereto, to provide a feedback system voltage 324 to the controller 40. In one implementation, the system voltage 322 may include three line voltages from the transmissions line. In another implementation, the system voltage 322 may include line-to-line voltages transmitted between two transmission lines. The current sensor 34 is configured to measure a system current 342 of the three-phase AC electric power 262, and in response thereto, to provide a feedback system current 344 to the controller 40. In one implementation, the system current 342 may include three currents flowing through the transmission lines. The DC voltage sensor 50 is configured to measure a DC voltage 222 across the DC link 24, and in response thereto, to provide a feedback DC voltage 502 to the controller 40.

The controller 40 operates in response to the feedback system voltage 324, the feedback system current 344, and feedback DC voltage 502 from DC sensor 50 and a variety of system commands to generate a control signal 408 for controlling the grid-side converter 26. The system commands may include a positive reactive power command 402, a negative reactive power command 404, and a DC voltage command 406. Although not a focus of this disclosure, controller 40 itself or an additional controller may be used to provide control signals for the machine-side converter 22. Further details of the controller 40 will be described below.

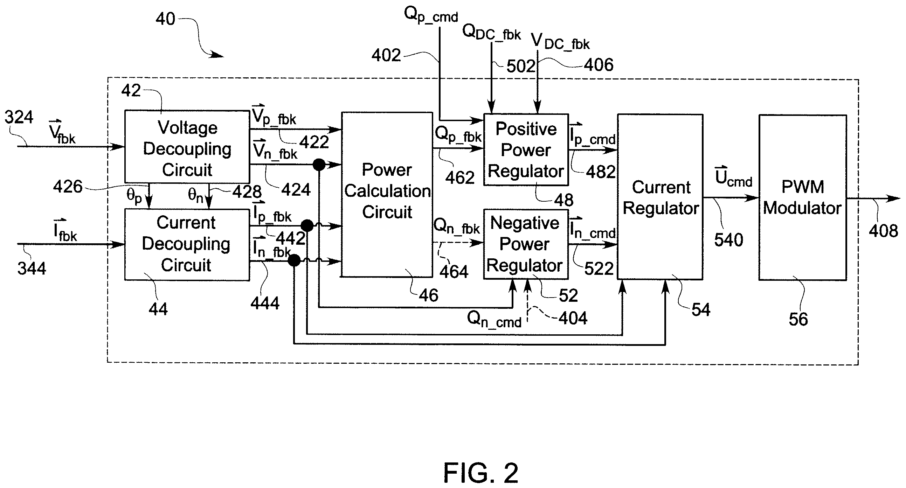

FIG. 2 illustrates a block diagram of the controller 40 shown in FIG. 1 in accordance with an exemplary embodiment. As illustrated in FIG. 2, the controller 40 includes a voltage decoupling circuit 42, a current decoupling circuit 44, a power calculation circuit 46, a positive power regulator 48, a negative power regulator 52, a current regulator 54, and a PWM modulator 56.

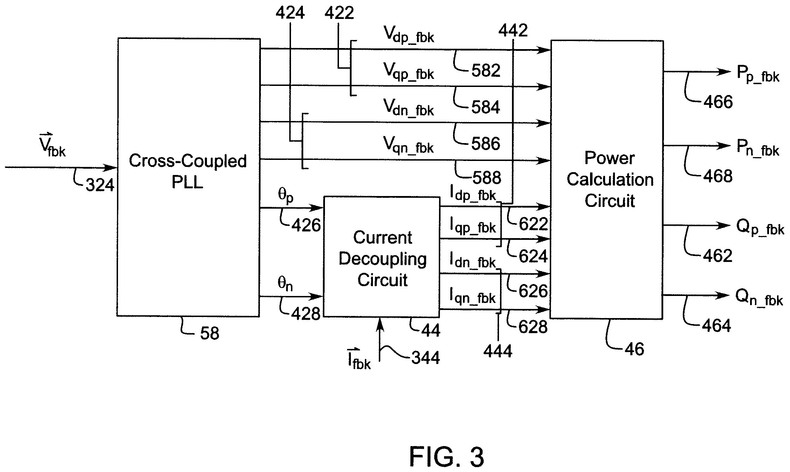

As illustrated in FIG. 2, the voltage decoupling circuit 42 is coupled to the voltage sensor 32 (FIG. 1) to receive the feedback system voltage 324 from the voltage sensor 32. The voltage decoupling circuit 42 is configured to decouple positive and negative voltage components from the feedback system voltage 324. In one implementation of the disclosure, the voltage decoupling circuit 42 may include a crossed-coupled phase lock loop (CCPLL) circuit 58 as shown in FIG. 3. In a synchronously rotating two-phase direct and quadrature (d-q) reference frame, the feedback positive sequence voltage component 422 decoupled from the CCPLL circuit 58 includes a d-axis positive voltage 582 and a q-axis positive voltage 584. Similarly, the feedback negative sequence voltage 424 decoupled from the CCPLL circuit 58 includes a d-axis negative voltage 586 and a q-axis negative voltage 588. The CCPLL circuit 58 is also configured to provide a positive phase angle 426 and a negative phase angle 428. In one implementation, an example of a CCPLL circuit 58 can be found in commonly assigned Weng et al., US Patent 7,456,695, which is incorporated by reference herein.

As illustrated in FIG. 2, the current decoupling circuit 44 is coupled to the current sensor 34 (FIG. 1) to receive the feedback system current 344 from the current sensor 34. The current decoupling circuit 44 is configured to decouple positive and negative current components from the feedback system current 344 according to the positive and negative phase angles 426, 428 generated by the voltage decoupling circuit 42. In one implementation illustrated in FIG. 3, in the d-q reference frame, the feedback positive sequence current 442 decoupled from the current decoupling circuit 44 includes a d-axis positive current 622 and a q-axis positive current 624, and the feedback negative sequence current 444 decoupled from the current decoupling circuit 44 includes a d-axis negative current 626 and a q-axis negative current 628. Further details of the current decoupling circuit 44 will be described below.

As illustrated in FIG. 2, the power calculation circuit 46 is coupled both to the voltage decoupling circuit 42 and the current decoupling circuit 44 for receiving the decoupled positive and negative sequence voltage components and positive and negative sequence current components to perform power calculation. In one implementation of the disclosure, the power calculation circuit 46 receives the feedback positive and negative sequence voltages 422, 424 and the feedback positive and negative sequence currents 442, 444 for use in calculating a feedback positive reactive power 462 and a feedback negative reactive power 464. After the feedback positive and negative reactive powers 462, and 464 are calculated, the controller 40 may perform reactive power control based on the positive reactive power command 402 and the negative reactive power command 404. In another implementation, further referring to FIG. 3, the power calculation circuit 46 may be further configured to calculate a feedback positive active power 466 and a feedback negative active power 468 for facilitating performing active power control. Further details of calculating the feedback positive and negative reactive power will be described below.

As illustrated in FIG. 2, the positive power regulator 48 is coupled to the power calculation circuit 46. The positive power regulator 48 is configured to receive the feedback positive reactive power 462 and to perform a positive reactive power control according to the positive reactive power command 402. The positive power regulator 48 is further configured to receive the feedback DC voltage 502 and to perform a positive active power control according to the DC command 406. By performing the positive reactive and active power controls, the positive power regulator 48 provides a positive current command 482. Further details of performing the positive reactive power control will be described below.

As illustrated in FIG. 2, the negative power regulator 52 is configured to receive the feedback negative reactive power 464 and to perform a negative reactive power according to the negative reactive power command 404. By performing the negative reactive power control, the negative power regulator 52 provides a negative current command 522. Further details of performing the negative reactive power control will be described below.

As illustrated in FIG. 2, the current regulator 54 is coupled to the positive power regulator 48 and the negative power regulator 52 for receiving the positive current command 482 and the negative current command 522. The current regulator 54 may also be coupled to the current decoupling circuit 44 for receiving the feedback positive and negative sequence current 442, 444. In one implementation, the current regulator 54 processes the feedback positive and negative sequence current 442, 444 and the positive and negative current commands 482, 522 to provide a voltage command 540. The voltage command 540 is modulated in the PWM modulator 56 to provide the control signal 408. The control signal 408 is applied to the grid-side converter 26 (FIG. 1) for driving the grid-side converter 26 to generate desired current output. The control signal 408 may include pulse signals having on and off states.

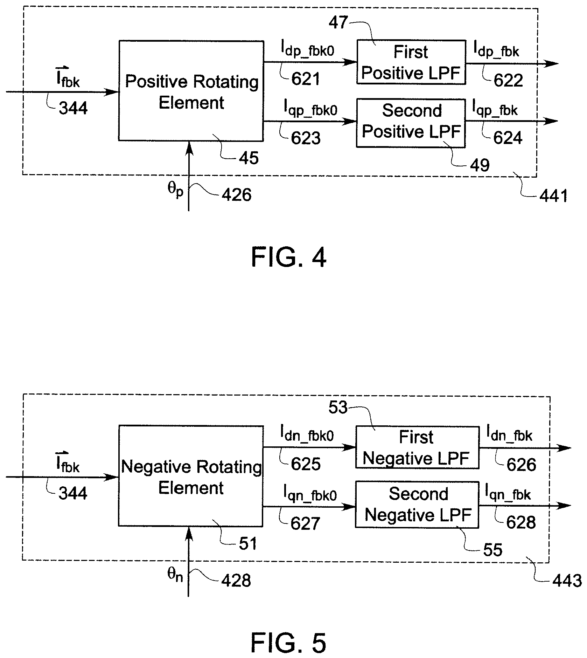

FIG. 4 illustrates a block diagram of one embodiment of a positive current decoupling circuit 441 of the current decoupling circuit 44 for use in the embodiment in FIG. 3. The positive current decoupling circuit 441 is configured to decouple positive sequence current components from the feedback system current 344. In one implementation, the positive current decoupling circuit 441 includes a positive rotating element 45, a first positive low pass filter (LPF) 47, and a second positive LPF 49. The positive rotating element 45 is coupled to the current sensor 34 (FIG. 1) to receive the feedback system current 344 from the current sensor 34. The positive rotating element 45 rotates the feedback system current 344 according to the positive phase angle 426 and outputs a d-axis positive current 621 and a q-axis positive current 623. In one implementation, the positive rotating element 45 may rotate the three phase feedback system current 344 to two phase positive feedback current in the d-q reference frame according to the following matrix equation:

$$\begin{bmatrix} I_{dp\_fbk0} \\ I_{qp\_fbk0} \end{bmatrix} = \begin{bmatrix} \dfrac{2}{3}\cos\theta_p & -\dfrac{1}{3}\cos\theta_p + \dfrac{\sqrt{3}}{3}\sin\theta_p & -\dfrac{1}{3}\cos\theta_p - \dfrac{\sqrt{3}}{3}\sin\theta_p \\ -\dfrac{2}{3}\sin\theta_p & \dfrac{1}{3}\sin\theta_p + \dfrac{\sqrt{3}}{3}\cos\theta_p & \dfrac{1}{3}\sin\theta_p - \dfrac{\sqrt{3}}{3}\cos\theta_p \end{bmatrix} \begin{bmatrix} I_{a\_fbk} \\ I_{b\_fbk} \\ I_{c\_fbk} \end{bmatrix} \quad (1),$$

where $I_{dp\_fbk0}$, $I_{qp\_fbk0}$ are the d-axis positive current 621 and the q-axis positive current 623 respectively in the d-q reference frame, $\theta_p$ is the positive phase angle 426, and $I_{a\_fbk}$, $I_{b\_fbk}$, $I_{c\_fbk}$ are three phase current components of the feedback system current 344. The first positive LPF 47 removes high frequency components from the d-axis positive current 621 and outputs the d-axis positive current 622. The second positive LPF 49 removes high frequency components from the q-axis positive current 623 and outputs the q-axis positive current 624.

FIG. 5 illustrates a block diagram of one embodiment of a negative current decoupling circuit 443 of the current decoupling circuit 44 for use in the embodiment in FIG. 3. The negative current decoupling circuit 443 is configured to decouple negative sequence current components from the feedback system current 344. In one implementation, the negative current decoupling circuit 443 includes a negative rotating element 51, a first negative low pass filter (LPF) 53, and a second negative LPF 55. The negative rotating element 51 is coupled to the current sensor 34 (FIG. 1) to receive the feedback system current 344 from the current sensor 34. The negative rotating element 51 rotates the feedback system current 344 according to the negative phase angle 428 and outputs a d-axis negative current 625 and a q-axis negative current 627. In one implementation, the negative rotating element 51 may rotate the three phase feedback system current 344 to two phase negative feedback current in the d-q reference frame according to the following matrix equation:

$$
\begin{bmatrix} I_{dn\_fbk0} \\ I_{qn\_fbk0} \end{bmatrix} = \begin{bmatrix} \dfrac{2}{3}\cos\theta_n & -\dfrac{1}{3}\cos\theta_n + \dfrac{\sqrt{3}}{3}\sin\theta_n & -\dfrac{1}{3}\cos\theta_n - \dfrac{\sqrt{3}}{3}\sin\theta_n \\ -\dfrac{2}{3}\sin\theta_n & \dfrac{1}{3}\sin\theta_n + \dfrac{\sqrt{3}}{3}\cos\theta_n & \dfrac{1}{3}\sin\theta_n - \dfrac{\sqrt{3}}{3}\cos\theta_n \end{bmatrix} \begin{bmatrix} I_{a\_fbk} \\ I_{b\_fbk} \\ I_{c\_fbk} \end{bmatrix} \qquad (2),
$$

where $I_{dn\_fbk0}$, $I_{qn\_fbk0}$ are the d-axis negative current 625 and the q-axis negative current 627 in the d-q reference frame, $\theta_n$ is the negative phase angle 428, and $I_{a\_fbk}$, $I_{b\_fbk}$, $I_{c\_fbk}$ are three phase current components of the feedback system current 344. The first negative LPF 53 removes high frequency components from the d-axis negative current 625 and outputs the d-axis negative current 626). The second negative LPF 55 removes high frequency components from the q-axis negative current 627 and outputs the q-axis negative current 628.

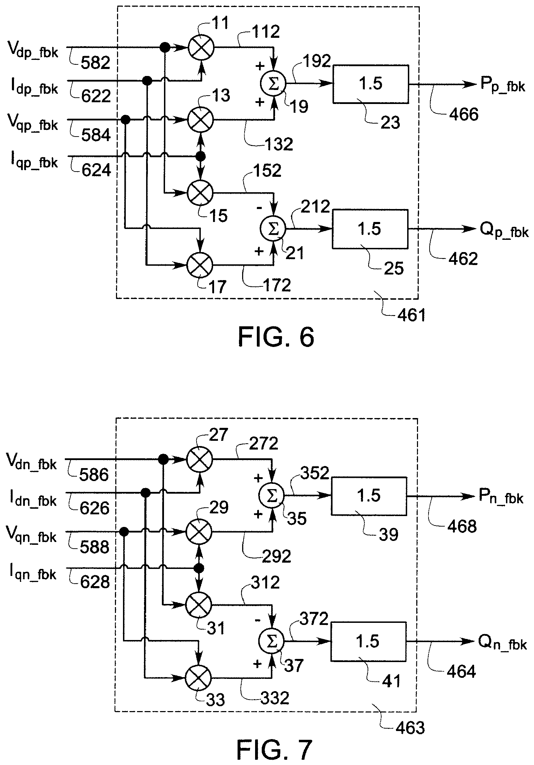

FIG. 6 illustrates a block diagram of a first power calculation module 461 of the power calculation circuit 46 shown in FIG. 3 in accordance with an exemplary embodiment. The first power calculation module 461 is configured to calculate the feedback positive reactive power 462 and the feedback positive active power 466 according to the feedback positive voltages 582, 584 and feedback positive currents 622, 624. In one implementation, the first power calculation module 461 includes a first multiplication element 11, a second multiplication element 13, a third multiplication element 15, a fourth multiplication element 17, a first summation element 19, a second summation element 21, a first processing element 23, and a second processing element 25. The first multiplication element 11 multiplies the d-axis positive voltage 582 with the d-axis positive current 622 and provides a first multiplied signal 112. The second multiplication element 13 multiplies the q-axis positive voltage 584 with the q-axis positive current 624 and provides a second multiplied signal 132. The first summation element 19 sums the first multiplied signal 112 and the second multiplied signal 132 and provides a summation signal 192. The summation signal 192 is processed by the first processing element 23 to provide the feedback positive active power 466. In one example, the first processing element 23 multiplies the summation signal 192 by a coefficient or factor of 1.5. The third multiplication element 15 multiplies the d-axis positive voltage 582 with the q-axis positive current 624 and provides a third multiplied signal 152. The fourth multiplication element 17 multiplies the q-axis positive voltage 584 with the d-axis positive current 622 and provides a fourth multiplied signal 172. The second summation element 21 subtracts the third multiplied signal 152 from the fourth multiplied signal 172 and provides a subtracted signal 212. The subtracted signal 212 is processed by the second processing element 25 to provide the feedback positive reactive power 462. In one example, processing element 25 multiplies the subtracted signal 212 by a coefficient or factor of 1.5.

FIG. 7 illustrates a block diagram of a second power calculation module 463 of the power calculation circuit 46 shown in FIG. 3 in accordance with an exemplary embodiment. The second power calculation module 463 is configured to calculate the feedback negative reactive power 464 and the feedback negative active power 468 according to the feedback negative voltages 586, 588 and the feedback negative currents 626, 628. In one implementation, the second power calculation module 463 includes a first multiplication element 27, a second multiplication element 29, a third multiplication element 31, a fourth multiplication element 33, a first summation element 35, a second summation element 37, a first processing element 39, and a second processing element 41. The first multiplication element 27 multiplies the d-axis negative voltage 586 with the d-axis negative current 626 and provides a first multiplied signal 272. The second multiplication element 29 multiplies the q-axis negative voltage 588 with the q-axis negative current 628 and provides a second multiplied signal 292. The first summation element 35 sums the first multiplied signal 272 and the second multiplied signal 292 and provides a summation signal 352. The summation signal 352 is processed by the first processing element 39 to get the feedback negative active power 468. The third multiplication element 31 multiplies the d-axis negative voltage 586 with the q-axis negative current 628 and provides a third multiplied signal 312. The fourth multiplication element 33 multiplies the q-axis negative voltage 588 with the d-axis negative current 626 and provides a fourth multiplied signal 332. The second summation element 37 subtracts the third multiplied signal 312 from the fourth multiplied signal 332 and provides a subtracted signal 372. The subtracted signal 372 is processed by the second processing element 41 to get the feedback negative reactive power 464.

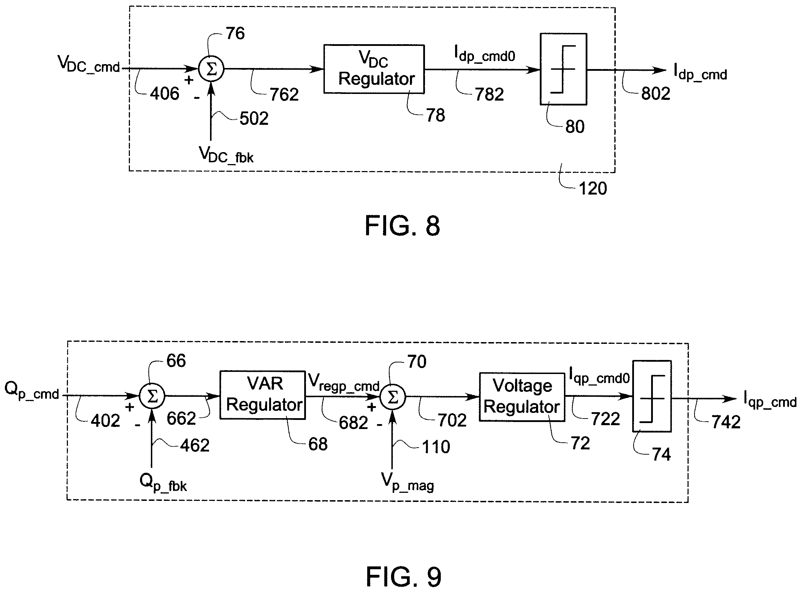

FIG. 8 illustrates a block diagram of a first positive regulation module 120 of the positive power regulator 48 shown in FIG. 2 in accordance with an exemplary embodiment. The first positive regulation module 120 is configured to regulate the feedback DC voltage 502 from the DC sensor 50 as well as the DC command 406 and to provide a d-axis positive current command 802. In one implementation, the first positive regulation module 120 includes a first summation element 76, a DC voltage regulator 78, and a current limiter 80 coupled in series. The feedback DC voltage 502 is subtracted from the DC command 406 by the first summation element 76 to provide a difference DC voltage command 762. The difference DC voltage command 762 is regulated by the DC voltage regulator 78 to provide a d-axis positive current command 782. The current limiter 80 limits the d-axis positive current command 782, such that the resulting d-axis positive current command 802 does not exceed the capability of the grid-side converter 26 (FIG. 1).

FIG. 9 illustrates a block diagram of a second positive regulation module 140 of the positive power regulator 48 shown in FIG. 2 in accordance with an exemplary embodiment. The second positive regulation module 140 is configured to regulate the feedback positive reactive power 462 from the power calculation circuit 46 according to the positive reactive power command 402 and to provide a q-axis positive current command 742. In one implementation, the second positive regulation module 140 includes a first summation element 66, a VAR regulator 68, a second summation element 70, a voltage regulator 72, and a current limiter 74 coupled in series. The feedback positive reactive power 462 is subtracted from the positive reactive power command 402 by the first summation element 66 to provide a difference positive reactive power command 662. The difference positive reactive power command 662 is regulated by the VAR regulator 68 to provide a regulated voltage command 682. A positive voltage magnitude 110 is subtracted from the regulated voltage command 682 by the second summation element 70 to provide a difference regulated voltage command 702. The positive voltage magnitude 110 can be calculated by the following expression:

$$V_{p\_mag} = \sqrt{V_{dp}^{\,2} + V_{qp}^{\,2}} \quad (3),$$

wherein $V_{p\_mag}$ is positive voltage magnitude 110, $V_{dp}$ is the d-axis positive voltage 582, and $V_{qp}$ is the q-axis positive voltage 584. The difference regulated voltage command 702 is further regulated by the voltage regulator 72 to provide a q-axis positive current command 722. The current limiter 74 limits the q-axis positive current command 722, such that the resulting q-axis positive current command 742 does not exceed the capability of the grid-side converter 26 (FIG. 1).

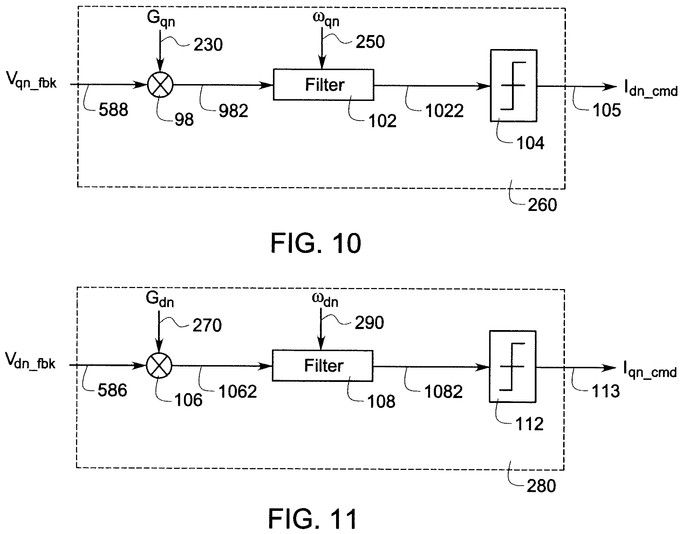

FIG. 10 illustrates a block diagram of a first negative regulation module 260 of the negative power regulator 52 of FIG. 2 in accordance with an exemplary embodiment. The first negative regulation module 260 is configured to regulate the q-axis negative voltage 588 and to provide a d-axis negative current command 105. In one implementation, the first negative regulation module 260 emulates a L-R load in negative sequence, e.g., an inductance in negative sequence. The first negative regulation module 260 includes a multiplication element 98, a filter 102, and a limiter 104 coupled in series. The multiplication element 98 multiplies the q-axis negative voltage 588 by a q-axis gain signal 230 and provides a d-axis negative current 982. The filter 102 filters the d-axis negative current 982 according to a q-axis signal 250 and provides a filtered d-axis negative current command 1022. The q-axis signal 250 is a predetermined signal and is supplied for indicating a bandwidth of the filter 102. The limiter 104 limits the filtered d-axis negative current command 1022 and provides the d-axis negative current command 105.

FIG. 11 illustrates a block diagram of a second negative regulation module 280 of the negative power regulator 52 of FIG. 2 in accordance with an exemplary embodiment. The second negative regulation module 280 is configured to regulate the d-axis negative voltage 586 and to provide a q-axis negative current command 113. In one implementation, the second negative regulation module 280 also emulates a L-R load in negative sequence, e.g., an inductance in negative sequence. The second negative regulation module 280 includes a multiplication element 106, a filter 108, and a limiter 112 coupled in series. The multiplication element 106 multiplies the d-axis negative voltage 586 by a gain signal 270 and provides a q-axis negative current 1062. The filter 108 filters the q-axis negative current 1062 according to a d-axis signal 290 and provides a filtered q-axis negative current signal 1082. The d-axis signal 290 is also a predetermined signal and is supplied for indicating a bandwidth of the filter 108. The limiter 112 limits the filtered q-axis negative current signal 1082 and provides the q-axis negative current command 113.

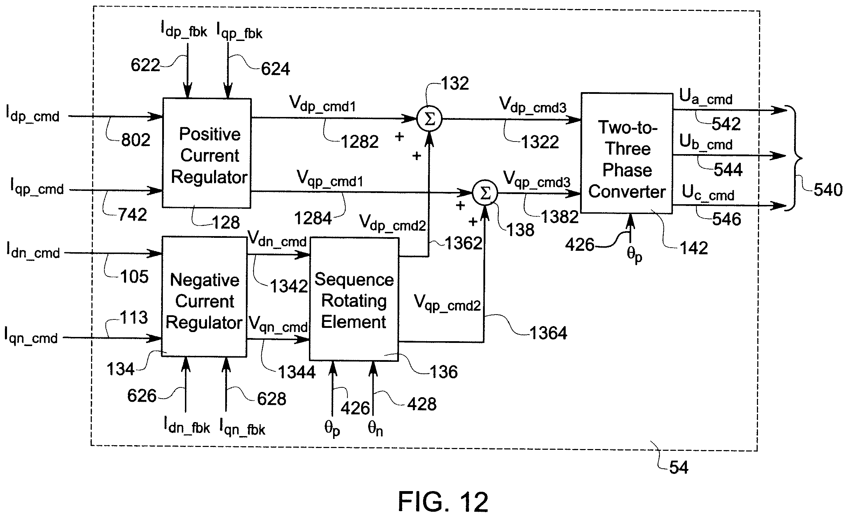

FIG. 12 illustrates a block diagram of the current regulator 54 shown in FIG. 2. The current regulator 54 is configured to control respective current errors of the feedback positive and negative current and the positive and negative current commands to zero in steady state. In one implementation, the current regulator 54 includes a positive current regulator 128, a negative current regulator 134, a first summation element 132, a second summation element 138, a sequence-rotating element 136, and a two-to-three phase converter 142.

As shown in FIG. 12, the positive current regulator 128 receives the d-axis positive current 622, the q-axis positive current 624, the d-axis positive current command 802, and the q-axis positive current command 742. The d-axis positive current 622 and the q-axis positive current 624 are regulated by the positive current regulator 128 according to the d-axis positive current command 802 and the q-axis positive current command 742 to provide a first d-axis positive voltage command 1282 and a first q-axis positive voltage command 1284.

As shown in FIG. 12, the negative current regulator 134 receives the d-axis negative current 626, the q-axis negative current 628, the d-axis negative current command 105, and the q-axis negative current command 113. The d-axis negative current 626 and the q-axis negative current 628 are regulated by the negative current regulator 134 according to the d-axis negative current command 105 and the q-axis negative current command 113 to provide a d-axis negative voltage command 1342 and a q-axis negative voltage command 1344. The d-axis negative voltage command 1342 and the q-axis negative voltage command 1344 in the negative sequence are rotated by the sequence-rotating element 136 to provide a second d-axis positive voltage command 1362 and a second q-axis positive voltage command 1364 in the positive sequence. In one implementation, the sequence-rotating element 136 may rotate the negative voltage components to positive voltage components in the d-q reference frame according to the following matrix equation:

$$\begin{bmatrix} V_{dp\_cmd2} \\ V_{qp\_cmd2} \end{bmatrix} = \begin{bmatrix} \cos\Delta\theta & \sin\Delta\theta \\ -\sin\Delta\theta & \cos\Delta\theta \end{bmatrix} \begin{bmatrix} V_{dn\_cmd} \\ V_{qn\_cmd} \end{bmatrix} \qquad (4),$$

where $V_{dp\_cmd2}$ is the second d-axis positive voltage command 1362, $V_{qp\_cmd2}$ is the second q-axis positive voltage command 1364, $\Delta\theta=\theta_p-\theta_n$, $\theta_p$ is the positive phase angle 426, $\theta_n$ is the negative phase angle 428, $V_{dn\_cmd}$ is the d-axis negative voltage command 1342, and $V_{qn\_cmd}$ is the q-axis negative voltage command 1344.

As further shown in FIG. 12, the first d-axis positive voltage command 1282 and the second d-axis positive voltage command 1362 are summed by the first summation element 132 to provide a third d-axis positive voltage command 1322. The first q-axis positive voltage command 1284 and the second q-axis positive voltage command 1364 are summed by the second summation element 138 to provide a third q-axis positive voltage command 1382. The third d-axis positive voltage command 1322 and the third q-axis positive voltage command 1382 are converted by the two-to-three phase converter 142 to provide three-phase voltage commands 542, 544, 546 according to the positive phase angle 426. In one implementation, the two-to-three phase converter 142 may convert the two phase voltage commands in the d-q reference frame to the three phase voltage commands according to the following matrix equation:

$$\begin{bmatrix} U_{a\_cmd} \\ U_{b\_cmd} \\ U_{c\_cmd} \end{bmatrix} = \begin{bmatrix} \cos\theta_p & -\sin\theta_p \\ \cos\left(\theta_p - \frac{2}{3}\pi\right) & -\sin\left(\theta_p - \frac{2}{3}\pi\right) \\ \cos\left(\theta_p + \frac{2}{3}\pi\right) & -\sin\left(\theta_p + \frac{2}{3}\pi\right) \end{bmatrix} \begin{bmatrix} V_{dp\_cmd3} \\ V_{qp\_cmd3} \end{bmatrix} \qquad (5),$$

where $U_{a\_cmd}$, $U_{b\_cmd}$, $U_{c\_cmd}$ are the three phase voltage command components 542, 544, 546 of the voltage command 540 respectively, $\theta_p$ is the positive phase angle 426, and $V_{dp\_cmd3}$, $V_{qp\_cmd3}$ are the third d-axis positive voltage command 1322 and the third q-axis positive voltage command 1382 respectively in the d-q reference frame. The three-phase voltage commands 542, 544, 546 are applied to the PWM modulator 56 to produce the control signal 408 for driving the grid-side converter 26 to generate desired current output.

As described above, the controller 40 is operated to decouple positive sequence voltage and current components and negative sequence voltage and current components from the power transmitted to the electrical grid 30. In one aspect of the disclosure, the controller 40 is further operated to calculate positive reactive power according to the decoupled positive sequence voltage and current components and to calculate negative reactive power according to the decoupled negative sequence voltage and current components. Because the positive reactive power and the negative reactive power are independently calculated, the controller 40 is further operated to perform positive reactive power regulation in the positive sequence and to perform negative reactive power regulation in the negative sequence. In this condition, both positive sequence reactive power and negative sequence reactive power are regulated, so that the reactive power of the power transmitted to the electrical grid 30 can be adjusted more accurately.

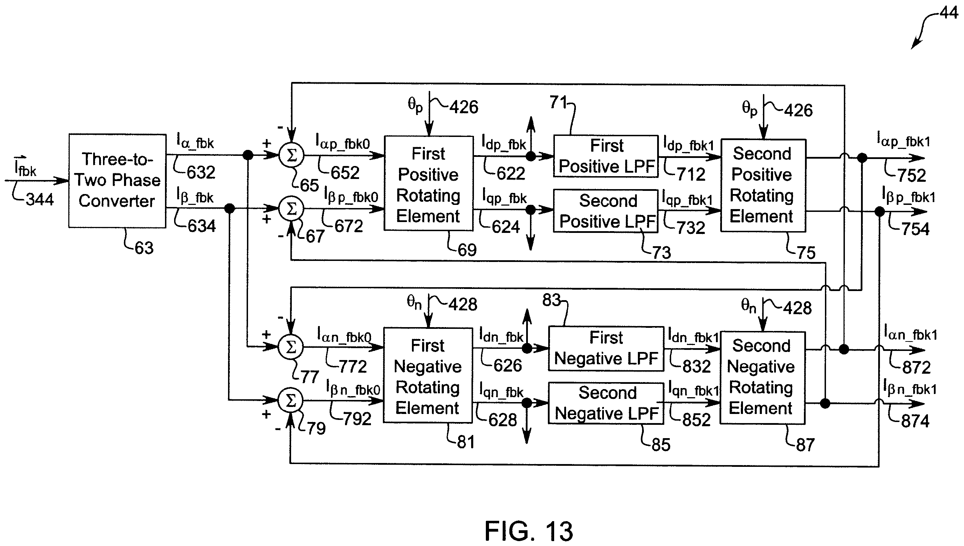

FIG. 13 illustrates a block diagram of another embodiment of the current decoupling circuit 44 for use in the embodiment of FIG. 3. In one implementation, the current decoupling circuit 44 includes a three-to-two phase converter 63, a first summation element 65, a second summation element 67, a first positive rotating element 69, a first positive low pass filter (LPF) 71, a second positive LPF 73, a second positive rotating element 75, a third summation element 77, a fourth summation element 79, a first negative rotating element 81, a first negative LPF 83, a second negative LPF 85, and a second negative rotating element 87. The three-to-two phase converter 63 is coupled to the current sensor 34 (FIG. 1) to receive the feedback system current 344 from the current sensor 34. The current decoupling circuit 44 is constructed in a cross-coupled manner. More specifically, in one aspect, two outputs of the second positive rotating element 75 are coupled to the third summation element 77 and the fourth summation element 79 respectively, and two outputs of the second negative rotating element 87 are coupled to the first summation 65 and the second summation element 67 respectively.

In one implementation, the three-to-two phase converter 63 converts the three-phase feedback system current 344 to two-phase feedback current, i.e., an $\alpha$-axis feedback current 632 and an $\beta$-axis feedback current 634. In one implementation, the three-to-two phase converter 63 may convert the three-phase feedback system current 344 to two-phase feedback current according to the following matrix equation:

$$\begin{bmatrix} I_{\alpha\_fbk} \\ I_{\beta\_fbk} \end{bmatrix} = \begin{bmatrix} \dfrac{2}{3} & -\dfrac{1}{3} & -\dfrac{1}{3} \\ 0 & \dfrac{\sqrt{3}}{3} & -\dfrac{\sqrt{3}}{3} \end{bmatrix} \begin{bmatrix} I_{a\_fbk} \\ I_{b\_fbk} \\ I_{c\_fbk} \end{bmatrix} \qquad (6),$$

wherein $I_{\alpha\_fbk}$, $I_{\beta\_fbk}$ are the $\alpha$-axis feedback current 632 and the $\beta$-axis feedback current 634 respectively in the $\alpha$-$\beta$ reference frame, and $I_{a\_fbk}$, $I_{b\_fbk}$, $I_{c\_fbk}$ are three phase current components of the feedback system current 344. As an $\alpha$-axis negative feedback current 872 and an $\beta$-axis negative feedback current 874 are derived from the second negative rotating element 87, the first summation element 65 subtracts the $\alpha$-axis negative feedback current 872 from the $\alpha$-axis feedback current 632 and outputs an $\alpha$-axis positive feedback current 652. The second summation element 67 subtracts the $\beta$-axis negative feedback current 874 from the $\beta$-axis feedback current 634 and outputs an $\beta$-axis positive feedback current 672.

The first positive rotating element 69 rotates the $\alpha$-axis positive feedback current 652 and the $\beta$-axis positive feedback current 672 according to the positive phase angle 426 and outputs a d-axis positive current 622 and a q-axis positive current 624. In one implementation, the first positive rotating element 69 may rotate the two phase positive current in the $\alpha$-$\beta$ reference frame to the two phase positive current in the d-q reference frame according to the following matrix equation:

$$\begin{bmatrix} I_{dp\_fbk} \\ I_{qp\_fbk} \end{bmatrix} = \begin{bmatrix} \cos\theta_p & \sin\theta_p \\ -\sin\theta_p & \cos\theta_p \end{bmatrix} \begin{bmatrix} I_{\alpha p\_fbk0} \\ I_{\beta p\_fbk0} \end{bmatrix} \qquad (7),$$

where $I_{dp\_fbk}$, $I_{qp\_fbk}$ are the d-axis positive current 622 and the q-axis positive current 624 respectively in the d-q reference frame, $\theta_p$ is the positive phase angle 426, and $I_{\alpha p\_fbk0}$, $I_{\beta p\_fbk0}$ are the $\alpha$-axis positive feedback current 652 and the $\beta$-axis positive feedback current 672 respectively in the $\alpha$-$\beta$ reference frame. The first positive LPF 71 and the second positive LPF 73 respectively remove high frequency components from the d-axis positive current 622 and the q-axis positive current 624 and output a filtered d-axis positive current 712 and a filtered q-axis positive current 732 correspondingly. The second positive rotating element 75 rotates the filtered d-axis positive current 712 and the filtered q-axis positive current 732 back to an $\alpha$-axis positive feedback current 752 and an $\beta$-axis positive feedback current 754 according to the positive phase angle 426. In one implementation, the second positive rotating element 75 may rotate the two phase positive current in the d-q reference frame to the two phase positive current in the $\alpha$-$\beta$ reference frame according to the following matrix equation:

$$\begin{bmatrix} I_{\alpha p\_fbk1} \\ I_{\beta p\_fbk1} \end{bmatrix} = \begin{bmatrix} \cos\theta_p & -\sin\theta_p \\ \sin\theta_p & \cos\theta_p \end{bmatrix} \begin{bmatrix} I_{dp\_fbk} \\ I_{qp\_fbk} \end{bmatrix} \qquad (8),$$

where $I_{\alpha p\_fbk1}$, $I_{\beta p\_fbk1}$ are the a-axis positive feedback current 752 and the $\beta$-axis positive feedback current 754 respectively in the $\alpha$-$\beta$ reference frame, $\theta_p$ is the positive phase angle 426, and $I_{dp\_fbk}$, $I_{qp\_fbk}$ are the d-axis positive current 712 and the q-axis positive current 732 respectively in the d-q reference frame. In one implementation, the d-axis positive current 622 and the q-axis positive current 624 are transmitted to the power calculation circuit 46 (FIG. 3) for calculating instantaneous active power and reactive power in positive and negative sequence respectively. It should be noted that, in an alternative embodiment, the filtered d-axis positive current 712 and the filtered q-axis positive current 732 are transmitted to the power calculation circuit 46 (FIG. 3) for calculating power.

Further referring to FIG. 13, the third summation element 77 subtracts the $\alpha$-axis positive feedback current 752 from the $\alpha$-axis feedback current 632 and outputs an $\alpha$-axis negative feedback current 772. The fourth summation element 79 subtracts the $\beta$-axis positive feedback current 754 from the $\beta$-axis feedback current 634 and outputs an $\beta$-axis negative feedback current 792. The first negative rotating element 81 rotates the $\alpha$-axis negative feedback current 772 and the $\beta$-axis negative feedback current 792 according to the negative phase angle 428 and outputs a d-axis negative current 626 and a q-axis negative current 628. In one implementation, the first negative rotating element 81 may rotate the two phase negative current in the $\alpha$-$\beta$ reference frame to the two phase negative current in the d-q reference frame according to the following matrix equation:

$$\begin{bmatrix} I_{dn\_fbk} \\ I_{qn\_fbk} \end{bmatrix} = \begin{bmatrix} \cos\theta_n & \sin\theta_n \\ -\sin\theta_n & \cos\theta_n \end{bmatrix} \begin{bmatrix} I_{\alpha n\_fbk0} \\ I_{\beta n\_fbk0} \end{bmatrix} \quad (9),$$

where $I_{dn\_fbk}$, $I_{qn\_fbk}$ are the d-axis negative current 626 and the q-axis negative current 628 respectively in the d-q reference frame, $\theta_n$ is the negative phase angle 428, and $I_{\alpha n\_fbk0}$, $I_{\beta n\_fbk0}$ are the $\alpha$-axis negative feedback current 772 and the $\beta$-axis negative feedback current 792 respectively in the $\alpha$-$\beta$ reference frame. The first negative LPF 83 and the second negative LPF 85 respectively remove high frequency components from the d-axis negative current 626 and the q-axis negative current 628 and output a filtered d-axis negative current 832 and a filtered q-axis negative current 852 correspondingly. The second negative rotating element 87 rotates the filtered d-axis negative current 832 and the filtered q-axis negative current 852 back to an $\alpha$-axis negative feedback current 872 and an $\beta$-axis negative feedback current 874 according to the negative phase angle 428. In one implementation, the second negative rotating element 87 may rotate the two phase positive current in the d-q reference frame to the two phase positive current in the $\alpha$-$\beta$ reference frame according to the following matrix equation:

$$\begin{bmatrix} I_{\alpha n\_fbk1} \\ I_{\beta n\_fbk1} \end{bmatrix} = \begin{bmatrix} \cos\theta_n & -\sin\theta_n \\ \sin\theta_n & \cos\theta_n \end{bmatrix} \begin{bmatrix} I_{dn\_fbk} \\ I_{qn\_fbk} \end{bmatrix} \quad (10),$$

where $I_{\alpha n\_fbk1}$, $I_{\beta n\_fbk1}$ are the $\alpha$-axis negative feedback current 872 and the $\beta$-axis negative feedback current 874 respectively in the $\alpha$-$\beta$ reference frame, $\theta_n$ is the negative phase angle 428, and $I_{dn\_fbk}$, $I_{qn\_fbk}$ are the d-axis negative current 832 and the q-axis negative current 852 respectively in the d-q reference frame. In one implementation, the d-axis negative current 626 and the q-axis negative current 628 are outputted to the power calculation circuit 46 (FIG. 3) for calculating instantaneous active power and reactive power in positive and negative sequence respectively. It should be noted that, in an alternative embodiment, the filtered d-axis negative current 832 and the filtered q-axis negative current 852 are transmitted to the power calculation circuit 46 (FIG. 3) for calculating power.

In alternative embodiments, the controller 40 of the system 100 may be further configured to have the capability of providing vector VAR control or vector VAR regulation even when the electrical grid 30 is subjected to voltage ride through conditions, such as low voltage ride through (LVRT), zero voltage ride through (ZVRT), and high voltage ride through (HVRT) conditions.

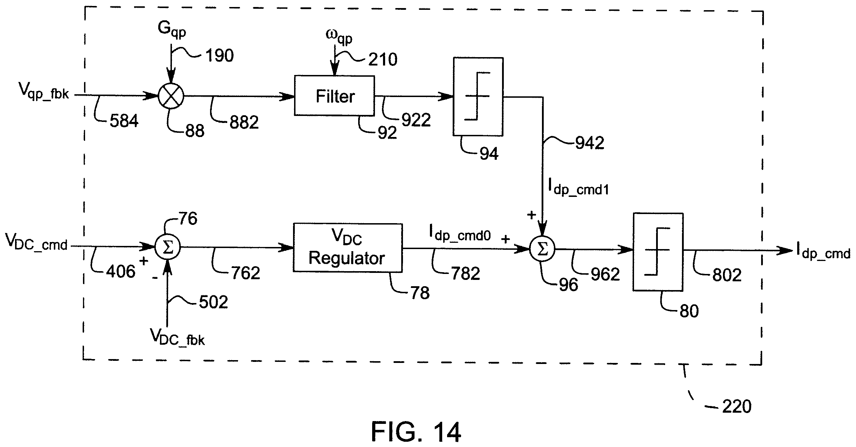

FIG. 14 illustrates a block diagram of a first positive regulation module 220 of the positive power regulator 48 shown in FIG. 2 in accordance with another exemplary embodiment. The first positive regulation module 220 is configured to provide a current command in consideration of voltage ride through conditions. In one implementation of the disclosure, the first positive regulation module 220 includes a first summation element 76, a DC voltage regulator 78, a second summation element 96, a first current limiter 80, a multiplication element 88, a filter 92, and a second current limiter 94.

As shown in a lower part of FIG. 14, the feedback DC voltage 502 is subtracted from the DC command 406 by the first summation element 76 to provide a difference DC voltage command 762. The difference DC voltage command 762 is regulated by the DC voltage regulator 78 to provide a first d-axis positive current command 782. As shown in an upper part of FIG. 11, the multiplication element 88 multiplies the q-axis positive voltage 584 by a q-axis gain signal 190 and provides a d-axis positive current 882. The filter 92 filters the d-axis positive current 882 according to a q-axis signal 210 and provides a filtered d-axis positive current command 922. The q-axis signal 210 is supplied for indicating a bandwidth of the filter 92. The second current limiter 94 limits the filtered d-axis positive current command 922 and provides a second d-axis positive current command 942. The second summation element 96 sums the first d-axis positive current command 782 and the second d-axis positive current command 942 and provides a third d-axis positive current command 962. The first current limiter 80 limits the third d-axis positive current command 962 and provides a limited d-axis positive current command 802. The limited d-axis positive current command 802 is transmitted to the positive current regulator 128.

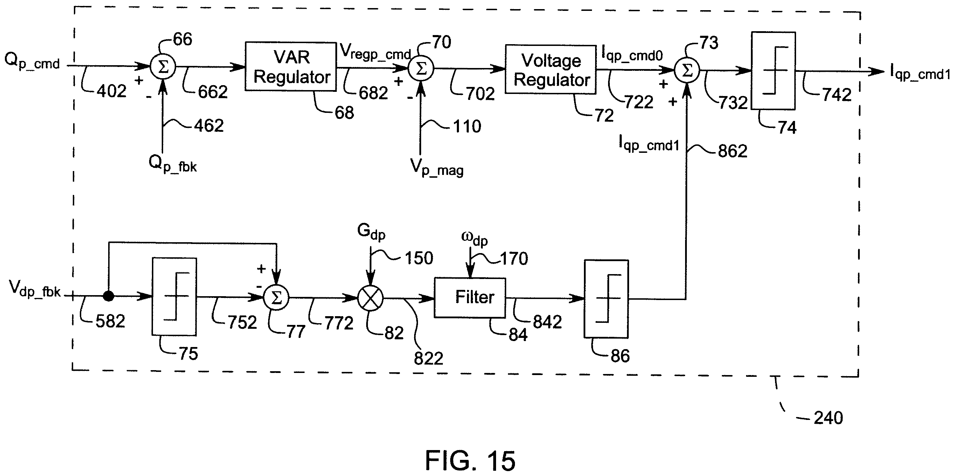

FIG. 15 illustrates a block diagram of a second positive regulation module 240 of the positive power regulator 48 shown in FIG. 2 in accordance with another exemplary embodiment. The second positive regulation module 240 is configured to provide a current command in consideration of voltage ride through conditions. In one implementation of the disclosure, the second positive regulation module 240 includes a first summation element 66, a VAR regulator 68, a second summation element 70, a voltage regulator 72, a voltage limiter 75, a third summation element 77, a gain element 82, a filter 84, a first current limiter 86, a fourth summation element 73, and a second current limiter 74.

As shown in an upper branch of FIG. 15, the feedback positive reactive power 462 is subtracted from the positive reactive power command 402 by the first summation element 66 to provide a difference positive reactive power command 662. The difference positive reactive power command 662 is regulated by the VAR regulator 68 and to provide a regulated positive voltage command 682. In one implementation, the VAR regulator 68 may include a proportional integral (PI) controller. Other type of controllers can also be used, for example, proportional derivative (PD) controllers, and proportional integral derivative (PID) controllers. A positive voltage magnitude 110 is subtracted from the regulated positive voltage command 682 by the second summation element 70 to provide a difference positive voltage command 702. The positive voltage magnitude 110 can be calculated by the expression (3) as discussed above with reference to FIG. 9. The difference positive voltage command 702 is further regulated by the voltage regulator 72 to provide a first q-axis positive current command 722. In one implementation, the voltage regulator 72 may include a PI controller. Other type of controllers can also be used, for example, proportional derivative (PD) controllers, and proportional integral derivative (PID) controllers.

As shown in a lower branch of FIG. 15, the voltage limiter 75 limits the d-axis positive voltage 582 and provides a limited d-axis positive voltage 752. The limited d-axis positive voltage 752 is subtracted from the d-axis positive voltage 582 by the third summation element 77 to provide a difference d-axis positive voltage 772. The gain element 82 multiplies the difference d-axis positive voltage 772 by a d-axis gain signal 150 and provides a q-axis positive current 822. The filter 84 filters the q-axis positive current 822 according to a d-axis signal 170 and provides a filtered q-axis positive current command 842. The d-axis signal 170 is a predetermined signal and is supplied for indicating a bandwidth of the filter 84. The filtered q-axis positive current command 842 is limited by the first current limiter 86 to provide a second q-axis positive current command 862. The fourth summation element 73 sums the first q-axis positive current command 722 and the second q-axis positive current command 862 and provides a third q-axis positive current command 732. The second current limiter 74 limits the third q-axis positive current command 732 and provides a limited q-axis positive current command 742. The limited q-axis positive current command 742 is transmitted to the positive current regulator 128 of FIG. 12.

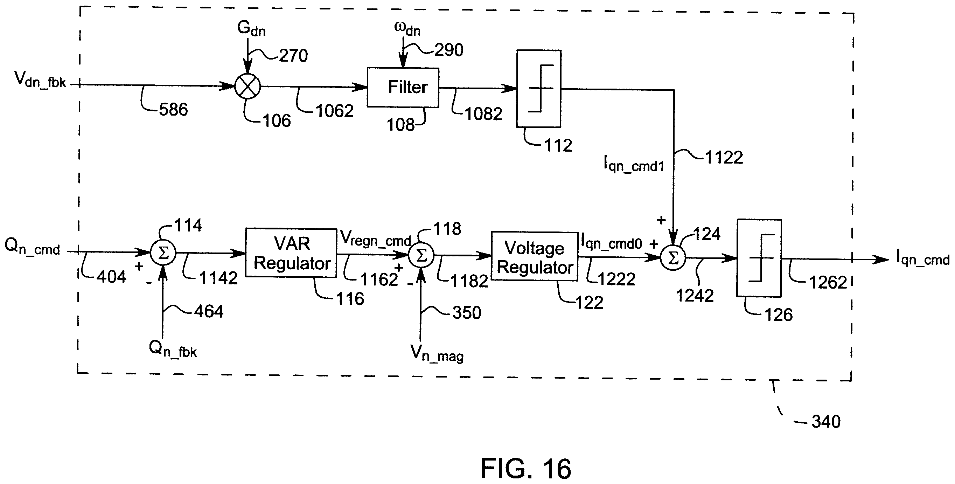

FIG. 16 illustrates a block diagram of a second negative regulation module 340 of the negative power regulator 52 shown in FIG. 2 in accordance with another exemplary embodiment. The second negative regulation module 340 is configured to regulate the d-axis negative voltage 586 and further to regulate the feedback negative reactive power 464 according to the negative reactive power command 404 to provide a q-axis negative current command 1262. In one implementation, the second negative regulation module 340 includes a multiplication element 106, a filter 108, a first limiter 112, a first summation element 114, a VAR regulator 116, a second summation element 118, a voltage regulator 122, a third summation element 124, and a second current limiter 126.

As shown in an upper branch of FIG. 16, the multiplication element 106 multiplies the d-axis negative voltage 584 by a d-axis gain signal 270 and provides a multiplied d-axis negative voltage 1062. The filter 108 processes the multiplied d-axis negative voltage 1062 according to a d-axis signal 290 and provides a first q-axis negative current command 1082. The first limiter 112 limits the q-axis negative current command 1082 and provides a limited first q-axis negative current command 1122.

As shown in a lower branch of FIG. 16, the feedback negative reactive power 464 is subtracted from the negative reactive power command 404 by the first summation element 114 to provide a difference negative reactive power command 1142. The difference negative reactive power command 1142 is regulated by the VAR regulator 116 and to provide a regulated negative voltage command 1162. A negative voltage magnitude 350 is subtracted from the regulated negative voltage command 1162 by the second summation element 118 to provide a difference negative voltage command 1182. The negative voltage magnitude 350 can be calculated by the following expression:

$$V_{n\_mag} = \sqrt{V_{dn}^{\,2} + V_{qn}^{\,2}} \quad (11),$$

wherein $V_{n\_mag}$ is the negative voltage magnitude 350, $V_{dn}$ is the d-axis negative voltage 586, and $V_{qn}$ is the q-axis negative voltage 588. The difference positive voltage command 1182 is further regulated by the voltage regulator 122 to provide a second q-axis negative current command 1222. The third summation element 124 sums the first q-axis negative current command 1122 and the second q-axis negative current command 1222 and provides a third q-axis negative current command 1242. The second current limiter 126 limits the third q-axis negative current command 1242 and provides a limited q-axis negative current command 1262. The q-axis negative current command 1262 is transmitted to the negative current regulator 134 for current regulation.

It is understood that the controller 40 may be implemented in a variety of ways. For instance, the controller 40 may hardwired or implemented as a set of computer programs operating on a general-purpose computer with appropriate interfaces to the voltage sensor 32, the current sensor 34, and the DC sensor 50.

## Claims

1.  A system (100) for performing reactive power control, the system comprising:

    a power converter (20) coupled between a power source (10) and an electrical grid (30), the power converter configured to convert a first form of electric power generated from the power source to a second form of electric power suitable to be distributed by the electrical grid; and
    a controller (40) coupled to the power converter, the controller configured to:

    i) monitor the electric power transmitted between the power converter and the electrical grid,
    ii) decouple a positive sequence component and a negative sequence component from the monitored electric power,
    iii) perform a positive reactive power control with respect to the positive sequence component,
    iv) perform a negative reactive power control with respect to the negative sequence component, and
    v) transmit a control signal to the power converter based on the positive reactive power control and the negative reactive power control to enable the power converter to adjust a reactive power of the electric power transmitted between the power converter and the electrical grid,

    **characterized in that** the controller (40) further comprises a pulse width modulation modulator (56) to supply the control signal; a positive power regulator (48) to generate a first d-axis positive current command according to a DC voltage across a DC link of the power converter and a specified DC voltage command and to generate a first q-axis positive current command according to a calculated feedback positive reactive power and a specified positive reactive power command; and a positive current regulator (128) to regulate the first d-axis positive current command and the first q-axis positive current command to generate a d-axis positive voltage command and a q-axis positive voltage command, to transform the d-axis positive voltage command and the q-axis positive voltage command to generate voltage commands, and to supply the voltage commands to the pulse width modulation modulator (56).

2.  The system (100) of claim 1, wherein the controller (40) is further configured to perform a positive active power control with respect to the positive sequence component and to perform a negative active power control with respect to the negative sequence component and wherein the controller is further configured to use the positive and negative active power controls in generating the control signal.

3.  The system of any preceding claim, wherein the power source (30) comprises an electrical machine, the power converter (20) comprises a machine-side converter and a grid-side converter, the machine-side converter is electrically coupled to the electrical machine for converting alternating current (AC) electric power generated by the electrical machine to direct current (DC) electric power, and the grid-side converter is electrically coupled to the electrical grid for converting the DC electric power to AC electric power in response to the control signal transmitted from the controller.

4.  The system (100) of any preceding claim, wherein the power converter (20) further comprises a DC link (24) coupled between the machine-side converter and the grid-side converter, the system further comprises a DC sensor (50) for measuring DC voltage across the DC link, and the controller (40) is further configured to use the monitored DC voltage in generating the control signal.

5.  The system (100) of any preceding claim, further comprising a voltage sensor (32) to monitor a system voltage of the electric power transmitted between the power converter and the electrical grid and a current sensor (34) configured to monitor a system current of the electric power transmitted between the power converter and the electrical grid.

6. The system (100) of any preceding claim, wherein the controller (40) comprises a crossed-coupled phase locked logic circuit and a current decoupling circuit, wherein the crossed-coupled phase locked logic circuit is configured to decouple a positive sequence voltage component, a negative sequence voltage component, a positive phase angle, and a negative phase angle from the monitored system voltage; and wherein the current decoupling circuit is configured to decouple a positive sequence current component and a negative sequence current component from the monitored system current according to the positive phase angle and the negative phase angle.

7. The system (100) of any preceding claim, wherein the controller (40) further comprises a power calculating circuit to calculate a feedback positive reactive power according to the positive sequence voltage component and the positive sequence current component, and to calculate a feedback negative reactive power according to the negative sequence voltage component and the negative sequence current component.

8. The system of any preceding claim, wherein the positive power regulator (48) is further configured to generate a second q-axis positive current command upon determination that a monitored d-axis voltage is being subjected to a voltage ride through condition, and to generate a third q-axis positive current command by summing the first q-axis positive current command and the second q-axis positive current command and to generate a second d-axis positive current command upon determination that a monitored q-axis voltage is being subjected to a voltage ride through condition, and to generate a third d-axis positive current command by summing the first d-axis positive current command and the second d-axis positive current command; wherein the positive current regulator (128) is further configured to regulate the third d-axis positive current command and the third q-axis positive current command to generate the d-axis positive voltage command and the q-axis positive voltage command.

9. The system (100) of any preceding claim, wherein the controller (40) further comprises a negative power regulator (52) to generate a first d-axis negative current command according to a monitored q-axis negative voltage and to generate a first q-axis negative current command according to a monitored d-axis negative voltage; and a negative current regulator (134) to regulate the first d-axis negative current command and the first q-axis negative current command to generate a d-axis negative voltage command and a q-axis negative voltage command, to rotate the d-axis negative voltage command and the q-axis negative voltage command in a positive sequence, to transform the rotated d-axis negative voltage command and the rotated q-axis negative voltage command in the positive sequence to generate voltage commands, and to supply the voltage commands to the pulse width modulation modulator (56).

10. The system (100) of claim 9, wherein the negative power (52) regulator is further configured to generate a second q-axis negative current command upon determination that a difference between a calculated feedback negative reactive power and a specified negative reactive power command is not zero, and to generate a third q-axis negative current command by summing the first q-axis negative current command and the second q-axis negative current command; wherein the negative current regulator is further configured to regulate the third q-axis negative current command to generate the q-axis negative voltage command.

11. A method for performing reactive power control with respect to electric power transmitted between a power source (10) and an electrical grid (30), the method comprising:

    monitoring the electric power transmitted between the power source and the electrical grid;
    decoupling a positive sequence component and a negative sequence component from the monitored electric power;
    performing a positive reactive power control with respect to the positive sequence component;
    performing a negative reactive power control with respect to the negative sequence component; and
    adjusting a reactive power of the electric power transmitted between the power source and the electrical grid based on the positive reactive power control and the negative reactive power control,

    **characterized in that** performing the positive reactive power control with respect to the positive sequence component comprises:

    generating a first d-axis positive current command according to a monitored DC voltage across a DC link of a power converter and a specified DC voltage command;
    generating a first q-axis positive current command according to a calculated feedback positive reactive power and a specified positive reactive power;
    regulating the first d-axis positive current command and the first q-axis positive current command to generate a d-axis positive voltage command and a q-axis positive voltage command;
transforming the d-axis positive voltage command and the q-axis positive voltage command to generate voltage command signals; and
supplying the voltage command signals to a pulse-width modulation modulator to trigger the pulse-width modulation modulator to generate the control signal.

12. The method of claim 11, further comprising:

performing a positive active power control with respect to the positive sequence component; and
performing a negative active power control with respect to the negative sequence component.

13. The method of claim 11 or 12, wherein decoupling the positive sequence component and the negative sequence component from the monitored electric power comprises:

decoupling a positive sequence voltage component, a negative sequence voltage component, a positive phase angle, and a negative phase angle from a monitored voltage of the electric power;
using the positive phase angle and the negative phase angle while decoupling a positive sequence current component and a negative sequence current component from a monitored current of the electric power ; and
calculating a feedback positive reactive power and a feedback negative reactive power using the decoupled positive sequence voltage component, the decoupled negative sequence voltage component, the decoupled positive sequence current component, and the decoupled negative sequence current component.

**Patentansprüche**

1. System (100) zum Durchführen einer Blindleistungsregelung, wobei das System umfasst:

einen Energiewandler (20), der zwischen einer Energiequelle (10) und einem Stromnetz (30) angeschlossen ist, wobei der Energiewandler dazu ausgelegt ist, eine erste Form elektrischer Energie, die von der Energiequelle erzeugt wird, in eine zweite Form elektrischer Energie umzuwandeln, die sich dazu eignet, durch das Stromnetz verteilt zu werden; und
eine Regelung (40), die an den Energiewandler angeschlossen ist, wobei die Regelung zu Folgendem ausgelegt ist:

i) die zwischen dem Energiewandler und dem Stromnetz übertragene elektrische Energie zu überwachen,
ii) eine Mitkomponente und eine Gegenkomponente aus der überwachten elektrischen Energie auszukoppeln,
iii) eine positive Blindleistungsregelung in Bezug auf die Mitkomponente durchzuführen,
iv) eine negative Blindleistungsregelung in Bezug auf die Gegenkomponente durchzuführen, und
v) ein Regelsignal, das auf der positiven Blindleistungsregelung und der negativen Blindleistungsregelung beruht, an den Energiewandler zu übertragen, um den Energiewandler in die Lage zu versetzen, eine Blindleistung der zwischen dem Energiewandler und dem Stromnetz übertragenen elektrischen Energie anzupassen,

**dadurch gekennzeichnet, dass** die Regelung (40) darüber hinaus einen Pulsbreitenmodulationsmodulator (56) umfasst, um das Regelsignal zu liefern; einen Positivleistungsregler (48), um einen ersten d-Achsen-Positivstrombefehl entsprechend einer Gleichspannung an einer Gleichstromverbindung des Energiewandlers und einen spezifizierten Gleichspannungsbefehl zu generieren, und um einen ersten q-Achsen-Positivstrombefehl entsprechend einer berechneten, rückgemeldeten positiven Blindleistung und einen spezifizierten positiven Blindleistungsbefehl zu generieren; und einen Positivstromregler (128), um den ersten d-Achsen-Positivstrombefehl und den ersten q-Achsen-Positivstrombefehl zu regeln, um einen d-Achsen-Positivspannungsbefehl und einen q-Achsen- Positivspannungsbefehl zu generieren, den d-Achsen-Positivspannungsbefehl und den q-Achsen-Positivspannungsbefehl zu transformieren, um Spannungsbefehle zu generieren, und die Spannungsbefehle dem Pulsbreitenmodulationsmodulator (56) zuzuführen.

2. System (100) nach Anspruch 1, wobei die Regelung (40) darüber hinaus dazu ausgelegt ist, eine positive Wirkleistungsregelung in Bezug auf die Mitkomponente und eine negative Wirkleistungsregelung in Bezug auf die Gegenkomponente durchzuführen, und wobei die Regelung darüber hinaus dazu ausgelegt ist, die positive und negative Wirkleistungsregelung beim Generieren des Regelsignals zu verwenden.

3.  System nach irgendeinem vorhergehenden Anspruch, wobei die Energiequelle (30) eine elektrische Maschine umfasst, der Energiewandler (20) einen maschinenseitigen Wandler und einen netzseitigen Wandler umfasst, der maschinenseitige Wandler elektrisch an die elektrische Maschine angeschlossen ist, um eine durch die elektrische Maschine erzeugte elektrische Wechselstrom-(AC)-Energie in eine elektrische Gleichstrom-(DC)-Energie umzuwandeln, und der netzseitige Wandler elektrisch an das Stromnetz angeschlossen ist, um die elektrische DC-Energie im Ansprechen auf das von der Regelung übertragene Regelsignal in elektrische AC-Energie umzuwandeln

4.  System (100) nach irgendeinem vorhergehenden Anspruch, wobei der Energiewandler (20) darüber hinaus ein DC-Bindeglied (24) umfasst, das zwischen dem maschinenseitigen Wandler und dem netzseitigen Wandler angeschlossen ist, das System darüber hinaus einen DC-Sensor (50) umfasst, um eine Gleichspannung am DC-Bindeglied zu messen, und die Regelung (40) darüber hinaus dazu ausgelegt ist, die überwachte Gleichspannung beim Generieren des Regelsignals zu verwenden.

5.  System (100) nach irgendeinem vorhergehenden Anspruch, darüber hinaus einen Spannungssensor (32) zum Überwachen einer Systemspannung der zwischen dem Energiewandler und dem Stromnetz übertragenen elektrischen Energie und einen Stromsensor (34) umfassend, der dazu ausgelegt ist, einen Systemstrom der zwischen dem Energiewandler und dem Stromnetz übertragenen elektrischen Energie zu überwachen.

6.  System (100) nach irgendeinem vorhergehenden Anspruch, wobei die Regelung (40) einen kreuzgekoppelten, phasenstarren logischen Schaltkreis und einen stromauskoppelnden Schaltkreis umfasst, wobei der kreuzgekoppelte, phasenstarre logische Schaltkreis dazu ausgelegt ist, eine Mitspannungskomponente, eine Gegenspannungskomponente, einen positiven Phasenwinkel und einen negativen Phasenwinkel aus der überwachten Systemspannung auszukoppeln; und wobei der stromauskoppelnde Schaltkreis dazu ausgelegt ist, eine Mitstromkomponente und eine Gegenstromkomponente entsprechend dem positiven Phasenwinkel und dem negativen Phasenwinkel aus dem überwachten Systemstrom auszukoppeln.

7.  System (100) nach irgendeinem vorhergehenden Anspruch, wobei die Regelung (40) darüber hinaus einen Energieberechnungsschaltkreis umfasst, um eine rückgekoppelte Positivblindleistung entsprechend der Mitspannungskomponente und der Mitstromkomponente zu berechnen, und eine rückgekoppelte Negativblindleistung entsprechend der Gegenspannungskomponente und der Gegenstromkomponente zu berechnen.

8.  System nach irgendeinem vorhergehenden Anspruch, wobei der Positivenergieregler (48) darüber hinaus dazu ausgelegt ist, einen zweiten q-Achsen-Positivstrombefehl bei der Bestimmung zu generieren, dass eine überwachte d-Achsen-Spannung einer Spannungsdurchlaufbedingung unterliegt, und einen dritten q-Achsen-Positivstrombefehl zu generieren, indem der erste q-Achsen- Positivstrombefehl und der zweite q-Achsen-Positivstrombefehl aufsummiert werden, und einen zweiten d-Achsen-Positivstrombefehl bei der Bestimmung zu generieren, dass eine überwachte q-Achsenspannung einer Spannungsdurchlaufbedingung unterliegt, und einen dritten d-Achsen-Positivstrombefehl zu generieren, indem der erste d-Achsen-Positivstrombefehl und der zweite d-Achsen- Positivstrombefehl aufsummiert werden; wobei der Positivstromregler (128) darüber hinaus dazu ausgelegt ist, den dritten d-Achsen-Positivstrombefehl und den dritten q-Achsen-Positivstrombefehl zu regeln, um den d-Achsen-Positivspannungsbefehl und den q-Achsen-Positivspannungsbefehl zu generieren.

9.  System (100) nach irgendeinem vorhergehenden Anspruch, wobei die Regelung (40) darüber hinaus einen Negativenergieregler (52), um einen ersten d-Achsen-Negativstrombefehl entsprechend einer überwachten q-Achsen-Negativspannung zu generieren, und einen ersten q-Achsen-Negativstrombefehl entsprechend einer überwachten d-Achsen-Negativspannung zu generieren; und einen Negativstromregler (134) umfasst, um den ersten d-Achsen-Negativstrombefehl und den ersten q-Achsen-Negativstrombefehl zu regeln, um einen d-Achsen-Negativspannungsbefehl und einen q-Achsen-Negativspannungsbefehl zu generieren, den d-Achsen-Negativspannungsbefehl und den q-Achsen-Negativspannungsbefehl in einer positiven Sequenz zu drehen, den gedrehten d-Achsen-Negativspannungsbefehl und den in der positiven Sequenz gedrehten q-Achsen-Negativspannungsbefehl zu transformieren, um Spannungsbefehle zu generieren, und die Spannungsbefehle dem Pulsbreitenmodulationsmodulator (56) zuzuführen.

10. System (100) nach Anspruch 9, wobei der Negativenergieregler (52) darüber hinaus dazu ausgelegt ist, einen zweiten q-Achsen-Negativstrombefehl bei der Bestimmung zu generieren, dass eine Differenz zwischen einer berechneten rückgekoppelten Negativblindleistung und einem spezifizierten Negativblindleistungsbefehl nicht Null beträgt, und einen dritten q-Achsen-Negativstrombefehl zu generieren, indem der erste q-Achsen-Negativstrombefehl und der zweite q-Achsen-Negativstrombefehl aufsummiert werden; wobei der Negativstromregler darüber hinaus dazu ausgelegt ist, den dritten q-Achsen-Negativstrombefehl zu regeln, um den q-Achsen-Negativspannungsbefehl zu generieren.

11. Verfahren zum Durchführen einer Blindleistungsregelung in Bezug auf eine zwischen einer Energiequelle (10) und einem Stromnetz (30) übertragene elektrischen Energie, wobei das Verfahren umfasst:

Überwachen der elektrischen Energie, die zwischen der Energiequelle und dem Stromnetz übertragen wird;
Auskoppeln einer Mitkomponente und einer Gegenkomponente aus der überwachten elektrischen Energie;
Durchführen einer Positivblindleistungsregelung in Bezug auf die Mitkomponente;
Durchführen einer Negativblindleistungsregelung in Bezug auf die Gegenkomponente; und
Anpassen einer Blindleistung der zwischen der Energiequelle und dem Stromnetz übertragenen elektrischen Energie auf Grundlage der Positivblindleistungsregelung und der Negativblindleistungsregelung,
**dadurch gekennzeichnet, dass** das Durchführen der Positivblindleistungsregelung in Bezug auf die Mitkomponente umfasst:

Generieren eines ersten d-Achsen-Positivstrombefehls entsprechend einer überwachten Gleichspannung an einem DC-Bindeglied eines Energiewandlers und einem spezifizierten Gleichspannungsbefehl;
Generieren eines ersten q-Achsen-Positivstrombefehls entsprechend einer berechneten rückgemeldeten Positivblindleistung und einem spezifizierten Positivblindleistungsbefehl;
Regeln des ersten d-Achsen-Positivstrombefehls und des ersten q-Achsen-Positivstrombefehls, um einen d-Achsen-Positivspannungsbefehl und einen q-Achsen-Positivspannungsbefehl zu generieren;
Transformieren des d-Achsen-Positivspannungsbefehls und des q-Achsen-Positivspannungsbefehls, um Spannungsbefehlssignale zu generieren; und
Zuführen der Spannungsbefehlssignale zu einem Pulsbreitenmodulationsmodulator, um den Pulsbreitenmodulationsmodulator dazu zu veranlassen, das Regelsignal zu generieren.

12. Verfahren nach Anspruch 11, darüber hinaus umfassend:

Durchführen einer Positivwirkleistungsregelung in Bezug auf die Mitkomponente; und
Durchführen einer Negativwirkleistungsregelung in Bezug auf die Gegenkomponente.

13. Verfahren nach Anspruch 11 oder 12, wobei das Auskoppeln der Mitkomponente und der Gegenkomponente aus der überwachten elektrischen Energie umfasst:

Auskoppeln einer Spannungsmitkomponente, einer Spannungsgegenkomponente, eines positiven Phasenwinkels und eines negativen Phasenwinkels aus einer überwachten Spannung der elektrischen Energie;
Verwenden des positiven Phasenwinkels und des negativen Phasenwinkels während eine Strommitkomponente und eine Stromgegenkomponente aus einem überwachten Strom der elektrischen Energie ausgekoppelt werden; und
Berechnen einer rückgekoppelten Positivblindleistung und einer rückgekoppelten Negativblindleistung unter Verwendung der ausgekoppelten Spannungsmitkomponente, der ausgekoppelten Spannungsgegenkomponente, der augekoppelten Strommitkomponente und der ausgekoppelten Stromgegenkomponente .

## Revendications

1. Système (100) servant à effectuer une commande de puissance réactive, le système comprenant :

un convertisseur de puissance (20) couplé entre une source de puissance (10) et un réseau électrique (30), le convertisseur de puissance étant configuré pour convertir une première forme de puissance électrique générée depuis la source de puissance en une deuxième forme de puissance électrique apte à être distribuée par le réseau électrique ; et
un dispositif de commande (40) couplé au convertisseur de puissance, le dispositif de commande étant configuré pour :

i) surveiller la puissance électrique transmise entre le convertisseur de puissance et le réseau électrique,

ii) découpler une composante de séquence positive et une composante de séquence négative de la puissance électrique surveillée,

iii) effectuer une commande de puissance réactive positive par rapport à la composante de séquence positive,

iv) effectuer une commande de puissance réactive négative par rapport à la composante de séquence négative, et

v) transmettre un signal de commande au convertisseur de puissance sur la base de la commande de puissance réactive positive et de la commande de puissance réactive négative pour permettre au convertisseur de puissance de régler une puissance réactive de la puissance électrique transmise entre le convertisseur de puissance et le réseau électrique,

**caractérisé en ce que** le dispositif de commande (40) comprend en outre un modulateur de modulation de largeur d'impulsion (56) pour fournir le signal de commande ; un régulateur de puissance positive (48) pour générer une première consigne de courant positif d'axe d selon une tension CC traversant une liaison CC du convertisseur de puissance et une consigne de tension CC spécifiée et pour générer une première consigne de courant positif d'axe q selon une puissance réactive positive de rétroaction calculée et une consigne de puissance réactive positive spécifiée ; et un régulateur de courant positif (128) pour réguler la première consigne de courant positif d'axe d et la première consigne de courant positif d'axe q pour générer une consigne de tension positive d'axe d et une consigne de tension positive d'axe q, pour transformer la consigne de tension positive d'axe d et la consigne de tension positive d'axe q pour générer des consignes de tension, et pour fournir les consignes de tension au modulateur de modulation de largeur d'impulsion (56).

2. Le système (100) de la revendication 1, sachant que le dispositif de commande (40) est en outre configuré pour effectuer une commande de puissance active positive par rapport à la composante de séquence positive et pour effectuer une commande de puissance active négative par rapport à la composante de séquence négative et sachant que le dispositif de commande est en outre configuré pour utiliser les commandes de puissance active positive et négative lors de la génération du signal de commande.

3. Le système d'une quelconque revendication précédente, sachant que la source de puissance (30) comprend une machine électrique, le convertisseur de puissance (20) comprend un convertisseur côté machine et un convertisseur côté réseau, le convertisseur côté machine est électriquement couplé à la machine électrique pour convertir de la puissance électrique de courant alternatif (CA) générée par la machine électrique en puissance électrique de courant continu (CC), et le convertisseur côté réseau est électriquement couplé au réseau électrique pour convertir la puissance électrique CC en puissance électrique CA en réponse au signal de commande transmis depuis le dispositif de commande.

4. Le système (100) d'une quelconque revendication précédente, sachant que le convertisseur de puissance (20) comprend en outre une liaison CC (24) couplée entre le convertisseur côté machine et le convertisseur côté réseau, le système comprend en outre un capteur CC (50) pour mesurer une tension CC traversant la liaison CC, et le dispositif de commande (40) est en outre configuré pour utiliser la tension CC surveillée lors de la génération du signal de commande.

5. Le système (100) d'une quelconque revendication précédente, comprenant en outre un capteur de tension (32) pour surveiller une tension de système de la puissance électrique transmise entre le convertisseur de puissance et le réseau électrique et un capteur de courant (34) configuré pour surveiller un courant de système de la puissance électrique transmise entre le convertisseur de puissance et le réseau électrique.

6. Le système (100) d'une quelconque revendication précédente, sachant que le dispositif de commande (40) comprend un circuit logique à phase asservie couplé transversalement et un circuit de découplage de courant, sachant que le circuit logique à phase asservie couplé transversalement est configuré pour découpler une composante de tension de séquence positive, une composante de tension de séquence négative, un angle de phase positif, et un angle de phase négatif de la tension de système surveillée ; et sachant que le circuit de découplage de courant est configuré pour découpler une composante de courant de séquence positive et une composante de courant de séquence négative du courant de système surveillé selon l'angle de phase positif et l'angle de phase négatif.

7. Le système (100) d'une quelconque revendication précédente, sachant que le dispositif de commande (40) comprend en outre un circuit de calcul de puissance pour calculer une puissance réactive positive de rétroaction selon la composante de tension de séquence positive et la composante de courant de séquence positive, et pour calculer une puissance réactive négative de rétroaction selon la composante de tension de séquence négative et la composante de courant de séquence négative.

8. Le système d'une quelconque revendication précédente, sachant que le régulateur de puissance positive (48) est en outre configuré pour générer une deuxième consigne de courant positif d'axe q en cas de détermination qu'une tension d'axe d surveillée est soumise à une condition de maintien de tension, et pour générer une troisième consigne de courant positif d'axe q en additionnant la première consigne de courant positif d'axe q et la deuxième consigne de courant positif d'axe q et pour générer une deuxième consigne de courant positif d'axe d en cas de détermination qu'une tension d'axe q surveillée est soumise à une condition de maintien de tension, et pour générer une troisième consigne de courant positif d'axe d en additionnant la première consigne de courant positif d'axe d et la deuxième consigne de courant positif d'axe d ; sachant que le régulateur de courant positif (128) est en outre configuré pour réguler la troisième consigne de courant positif d'axe d et la troisième consigne de courant positif d'axe q pour générer la consigne de tension positive d'axe d et la consigne de tension positive d'axe q.

9. Le système (100) d'une quelconque revendication précédente, sachant que le dispositif de commande (40) comprend en outre un régulateur de puissance négative (52) pour générer une première consigne de courant négatif d'axe d selon une tension négative d'axe q surveillée et pour générer une première consigne de courant négatif d'axe q selon une tension négative d'axe d surveillée ; et un régulateur de courant négatif (134) pour réguler la première consigne de courant négatif d'axe d et la première consigne de courant négatif d'axe q pour générer une consigne de tension négative d'axe d et une consigne de tension négative d'axe q, pour tourner la consigne de tension négative d'axe d et la consigne de tension négative d'axe q dans une séquence positive, pour transformer la consigne de tension négative d'axe d tournée et la consigne de tension négative d'axe q tournée dans la séquence positive pour générer des consignes de tension, et pour fournir les consignes de tension au modulateur de modulation de largeur d'impulsion (56).

10. Le système (100) de la revendication 9, sachant que le régulateur de puissance négative (52) est en outre configuré pour générer une deuxième consigne de courant négatif d'axe q en cas de détermination qu'une différence entre une puissance réactive négative de rétroaction calculée et une consigne de puissance réactive négative spécifiée n'est pas nulle, et pour générer une troisième consigne de courant négatif d'axe q en additionnant la première consigne de courant négatif d'axe q et la deuxième consigne de courant négatif d'axe q ; sachant que le régulateur de courant négatif est en outre configuré pour réguler la troisième consigne de courant négatif d'axe q pour générer la consigne de tension négative d'axe q.

11. Procédé servant à effectuer une commande de puissance réactive par rapport à une puissance électrique transmise entre une source de puissance (10) et un réseau électrique (30), le procédé comprenant :

la surveillance de la puissance électrique transmise entre la source de puissance et le réseau électrique ;
le découplage d'une composante de séquence positive et d'une composante de séquence négative de la puissance électrique surveillée ;
l'exécution d'une commande de puissance réactive positive par rapport à la composante de séquence positive ;
l'exécution d'une commande de puissance réactive négative par rapport à la composante de séquence négative ; et
le réglage d'une puissance réactive de la puissance électrique transmise entre la source de puissance et le réseau électrique sur la base de la commande de puissance réactive positive et de la commande de puissance réactive négative,
**caractérisé en ce que** l'exécution de la commande de puissance réactive positive par rapport à la composante de séquence positive comprend :

la génération d'une première consigne de courant positif d'axe d selon une tension CC surveillée traversant une liaison CC d'un convertisseur de puissance et une consigne de tension CC spécifiée ;
la génération d'une première consigne de courant positif d'axe q selon une puissance réactive positive de rétroaction calculée et une puissance réactive positive spécifiée ;
la régulation de la première consigne de courant positif d'axe d et de la première consigne de courant positif d'axe q pour générer une consigne de tension positive d'axe d et une consigne de tension positive d'axe q ;
la transformation de la consigne de tension positive d'axe d et de la consigne de tension positive d'axe q pour générer des signaux de consigne de tension ; et
la fourniture des signaux de consigne de tension à un modulateur de modulation de largeur d'impulsion pour déclencher le modulateur de modulation de largeur d'impulsion pour générer le signal de commande.

**12.** Le procédé de la revendication 11, comprenant en outre :

l'exécution d'une commande de puissance active positive par rapport à la composante de séquence positive ; et
l'exécution d'une commande de puissance active négative par rapport à la composante de séquence négative.

**13.** Le procédé de la revendication 11 ou 12, sachant que le découplage de la composante de séquence positive et de la composante de séquence négative de la puissance électrique surveillée comprend :

le découplage d'une composante de tension de séquence positive, d'une composante de tension de séquence négative, d'un angle de phase positif, et d'un angle de phase négatif d'une tension surveillée de la puissance électrique ;
l'utilisation de l'angle de phase positif et de l'angle de phase négatif pendant le découplage d'une composante de courant de séquence positive et d'une composante de courant de séquence négative d'un courant surveillé de la puissance électrique ; et
le calcul d'une puissance réactive positive de rétroaction et d'une puissance réactive négative de rétroaction moyennant la composante de tension de séquence positive découplée, la composante de tension de séquence négative découplée, la composante de courant de séquence positive découplée, et la composante de courant de séquence négative découplée.

FIG. 1

FIG. 2

EP 2 621 046 B1

FIG. 3

FIG. 4

FIG. 5

FIG. 6

FIG. 7

FIG. 8

FIG. 9

$V_{qn\_fbk}$ →〔588〕→ ⊗〔98〕 ←$G_{qn}$〔230〕→〔982〕→ Filter〔102〕 ←$\omega_{qn}$〔250〕→〔1022〕→ [104] →〔105〕→ $I_{dn\_cmd}$

〔260〕

## FIG. 10

$V_{dn\_fbk}$ →〔586〕→ ⊗〔106〕 ←$G_{dn}$〔270〕→〔1062〕→ Filter〔108〕 ←$\omega_{dn}$〔290〕→〔1082〕→ [112] →〔113〕→ $I_{qn\_cmd}$

〔280〕

## FIG. 11

FIG. 12

EP 2 621 046 B1

FIG. 13

FIG. 14

FIG. 15

EP 2 621 046 B1

EP 2 621 046 B1

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6052297 A
- WO 2010028689 A1

- US 7321500 B2
- US 7456695 B, Weng

**Non-patent literature cited in the description**

- Pliant Active and Reactive Power Control for Grid-Interactive Converters Under Unbalanced Voltage Dips. **FEI WANG et al.** IEEE Transactions on Power Electronics. IEEE Service Center, 01 May 2011, vol. 26, 1511-1521